# EUROPÄISCHE PATENTSCHRIFT

(11) **EP 0 377 226 B1**
(45) Veröffentlichungstag und Bekanntmachung des Hinweises auf die Patenterteilung: **11.08.1993**
(21) Anmeldenummer: 89124176.2
(22) Anmeldetag: 30.12.1989
(51) Int. Cl.: B60J 7/057, E05F 15/20, B60R 16/02

(54) **Niederschlagsabhängige Steuerung für Abdecksysteme**
Rain-dependent control of coverings
Système de commande réagissant à la pluie pour couvercles

(30) Priorität: 05.01.1989 DE 3900184; 05.06.1989 DE 3918331
(43) Veröffentlichungstag der Anmeldung: 11.07.1990
(73) Patentinhaber: Sattlecker, Armin, D-84489 Burghausen (DE); Högen, Hans, D-83308 Trostberg (DE)
(72) Erfinder: Resch, Martha, Jun., D-8398 Pocking 1 (DE)
(74) Vertreter: Zinnecker, Armin, Dipl.-Ing.

(56) Entgegenhaltungen:
- DE-A- 1 808 521
- FR-A- 2 185 333
- FR-A- 2 599 072
- GB-A- 2 189 906
- US-A- 4 740 735
- FUNKSCHAU, Band 50, Nr. 19, September 1978, MUNCHEN DE Seiten 103 - 104; KARL-HEINZ-SCHMIDT: "AUTOMATISCHE SCHEIBENWISCHERSTEUERUNG"
- PATENT ABSTRACTS OF JAPAN Band 9, Nr. 252 (M-420)(1975) 09 Oktober 1975,& JP-A-60 104419 (AISHIN SEIKI KK) 08 Juni 1985,ERSTEUERUNG"
- PATENT ABSTRACTS OF JAPAN Band 6, Nr. 146 (M-147)(1024) 05 August 1982,& JP-A-57 66014 (KASAI KOGYO KK) 22 April 1982,5,ERSTEUERUNG"
- PATENT ABSTRACTS OF JAPAN Band 10, Nr. 253 (M-512)(2309) 29 August 1986,& JP-A-61 81255 (OMRON TATEISI ELECTRONICS CO) 24 April 1986,

## Beschreibung

Die Erfindung bezieht sich auf eine niederschlagsabhängige Steuerung für Abdecksysteme. die beispielsweise bei Schiebe- und Hebedächern von Hallen, Automobilen und Gewächshäusern verwendbar ist, entsprechend dem Oberbegriff des Anspruchs 1.

Das Schließen von Abdecksystemen bei Hallen, Gewächshäusern, Cabriolets und Schiebe-Hebedächern an Kraftfahrzeugen muß bis heute in aller Regel noch durch Betätigen eines Schalters mit der Hand, dessen geschlossener Stromkreis einen Motor zur Schließung der Abdeckung in Betrieb nimmt, vorgenommen werden, wenngleich Sensoren verschiedener Art bekannt sind, die bei Auftreten von Niederschlag ein selbständiges Schließen von Abdeckungen ermöglichen. Hier ergibt sich aber die Problematik, daß ein nachträglicher oder serienmäßiger Einbau eines solchen Sensors mit entsprechender und angepaßter elektronischer Schaltung mit hohem Aufwand und dadurch mit zusätzlichen Kosten verbunden ist.

Aus dem Dokument DE-A-3 715 244 ist aber auch bereits eine entsprechend dem Oberbegriff des Anspruchs 1 ausgebildete, auf einen Umwelteinfluß ansprechende Stelleinrichtung für den aufklappbar gelagerten Deckel einer Dachluke, insbesondere für eine Lichtkuppel, bekannt. Hierbei sind ein Elektromotor, Endschalter und Steuerschaltungen in einem Gehäuse integriert angeordnet, während der der Umwelt ausgesetzte Teil des Sensors im wesentlichen an der Außenfläche des Gehäuses vorgesehen ist. Soweit bei der bekannten Stelleinrichtung zur Meßsignalerfassung von dem Prinzip der Kapazitätsmessung Gebrauch gemacht wird, sind dafür eine Wechselspannungsquelle als Sinusgenerator, Sinus-Rechteckumformer, Differenzierglieder, eine Kippschaltung, ein Integrator, ein Leistungsverstärker und eine Steuerschaltung vorgesehen. Durch Anschluß der Wechselspannungsquelle an eine Leiterbahn zweier Leiterbahnen des Sensors wird das Verhältnis zwischen Imaginärteil und Realteil der Impedanz ermittelt und bei Auftreten von Feuchtigkeit auf den Leiterbahnen die sich daraus ergebende Phasenverschiebung der Sinusschwingung über die Sinus-Rechteckumformer in Rechteckimpulse umgewandelt. Durch Ermittlung der Differenz und Mittelwertbildung mit Hilfe der Kippschaltung und des Integrators wird durch den Leistungsverstärker das aufbereitete Meßsignal dem Motor über die Steuerschaltung zugeführt.

Zur Erzielung einer meßbaren Amplitude am Ausgang dieser vielgliedrigen Schaltung sind ein Sinusgenerator und zusätzlich zur Signalaufbereitung mehrere Module erforderlich. Durch diese aufwendige bekannte Meßmethode können durch Schwellwertüber oder - unterschreitung nur absolute Feuchtigkeitsgrenzwerte abgefragt werden. Durch die Messung des absoluten Nässegrades ist eine Sensorpflege unumgänglich.

Die Erfindung hat sich die Aufgabe gestellt, ausgehend von der Steuerung entsprechend dem Oberbegriff des Anspruchs 1, mit einfachen Mitteln eine Abdeckung in Offenstellung bei Auftreten von Niederschlägen selbständig zu schließen. Gelöst wird diese Aufgabe durch die Merkmale des Patentanspruchs 1. Vorteilhafte Weiterbildungen gehen aus den Ansprüchen 2 bis 10 hervor.

Ein Kondensator ist eine Anordnung isolierter Elektroden. Für alle Anordnungen mit gleichen geometrischen Daten und gleichen dielektrischen Eigenschaften des isolierenden Mediums zwischen den Elektroden, hat der Quotient Ladung/Spannung, welcher als Kapazität des Kondensators bezeichnet wird, den gleichen Wert.

Mit einer derartigen Steuerung können Abdecksysteme, d. h. Dach- und Wandteile von Hallen jeglicher Art, Schiebe- und Hebedächer bei Automobilen, Dächer bei Cabriolets und Dach- bzw. Wandpartien von Gewächshäusern der Gartenbaubranche, bei Offenstellung automatisch geschlossen werden.

Zur Verwendung als Kondensatorelektroden eignen sich in Automobilen die Blechkarosserie und die Heizdrähte der elektrischen Scheibenheizung, welche bei ausgeschalteter Zündung galvanisch, z.B. durch Relaiskontakte, von den standardmäßigen Versorgungsanschlüssen getrennt und stattdessen mit der Kapazitätsmeßelektronik verbunden werden. Dieser Sensor ist somit bereits in nahezu jedem modernen Automobil integriert.

Da die Fahrzeuggeometrie unverändert bleibt, ändert sich die Kapazität zwischen der Blechkarosserie und den Heizdrähten der Scheibenheizung nur durch Veränderung des Dielektrikums im elektrostatischen Feld des Kondensators.

Kurzfristige Änderungen des Dielektrikums durch Eindringen von Personen oder Tieren in das relevante elektrostatische Feld können durch die Mikroprozessorsteuerung ausgeglichen werden, ebenfalls ausgeglichen werden können sowohl die normale Verschmutzung, welche relativ langsam stattfindet, als auch Störungseinflüsse einmaliger Art, wie Vogelkot oder ein verwehtes nasses Blatt innerhalb des elektrostatischen Feldes. Der Temperatureinfluß ist von so geringer Bedeutung, daß er ebenfalls problemlos ausgleichbar ist. Durch Bedienung der Steuerung kann jederzeit ein neues Kapazitätsnormal gespeichert werden.

Weiterer Vorteil ist der Schutz des Sensors gegenüber aggressiven Medien, da sich dieser speziell im geschützten Inneren des Automobils befindet bzw. aus dem Blech des Fahrzeuges besteht.

Bei Cabriolets, bei welchen die evtl. heizbare Heckscheibe während der Niederschlagsüberwachungszeit versenkt ist, und damit nicht als Sensor in Betracht kommt, kann mit minimalem Aufwand eine Ersatzelektrode eingebaut werden, welche aus einer leitenden und selbstklebenden Folie besteht, welche am oberen Rand der Innenseite der Frontscheibe ohne galvanische Verbindung zum Autoblech anzubringen ist. Diese leitende Folie wird fest mit der Mikroprozessorschaltung verbunden.

Das Kondensatorprinzip kann jedoch nicht nur bei Automobilen eingesetzt werden. Der Aufbau des Kondensators ist sehr einfach. Dieser besteht lediglich aus zwei voneinander isolierten Elektroden, bei welchen die Isolation bei sämtlichen Witterungseinflüssen beibehalten wird. Dieser Kondensator kann dann an jeder geeigneten Stelle an Gebäuden angebracht und mit der Mikroprozessorsteuerung verbunden werden.

Die Mikroprozessorsteuerung ist nicht nur in der Lage, das Antriebssystem unabhängig von der Stellung der Abdeckung zu steuern, sondern auch die üblichen Sicherheitsgarantien zu erfüllen, die daraus bestehen, das Antriebssystem dann rechtzeitig anzuhalten, wenn eine Verklemmung oder Einklemmung besteht.

Da die Steuerfähigkeit der Einrichtung von der Empfindlichkeit des Sensors abhängt, kommt der Ausbildung des Sensors eine besondere Bedeutung zu, die auf eine möglichst große Flächenausbildung der Elektroden hinausläuft. Durch eine mäanderförmige Anordnung der Elektroden erhält man zwar auf kleinstem Raum große Elektrodenflächen, die in der Lage sind, kleinste Veränderungen des Dielektrikums zuverlässig zu registrieren, jedoch läßt sich die zu einer kompakten Baueinheit zusammengeschlossene mäanderförmige Elektrodenanordnung nicht bei allen Einsatzgebieten unauffällig und ohne Störung des Gesamtbildes an dem jeweiligen Einsatzort montieren. So muß der Sensor für einen Einsatz in Automobilen eine besondere Ausgestaltung erfahren. Die Steuerung soll sich für einen Einsatz in Automobilen an die dortigen Gegebenheiten gut anpassen lassen und - auch als Nachrüsteinrichtung - einen geringen Aufwand erfordern. Eine Lösung hierfür ist durch die Merkmale des Patentanspruchs 5 gegeben.

Unter der Gleichartigkeit der flächig ausgebildeten Elektroden sind ausreichend große Metallflächen zu verstehen, die mit dem Zwischenraum aus Glas und Luft einen Kondensator ergeben. Solche Metallflächen lassen sich mit geringem Aufwand und unauffällig, z.B. als Metallfolien oder als aufgedampfte Metallbänder, an Autofenstern anbringen. Mit der Anbringung des Oszillators in unmittelbarer Nähe an einer der Elekroden wird eine ausreichende Empfindlichkeit erreicht, ohne den Aufwand an Steuerelementen erhöhen zu müssen.

Wird eine Elektrode als Leiterband zwischen die Heckscheibendrähte montiert, lassen sich die übrigen Fahrzeugteile wie die Karosserie und das Heckscheibenglas als Elemente eines Kondensators nutzen, wodurch sich die Erfindung mit geringem Aufwand realisieren läßt. Als Nachrüsteinrichtung in Automobilen ist dann lediglich neben dem Leiterband auf der Heckscheibe mit dem Oszillator eine zusätzliche zentrale Steuereinrichtung erforderlich.

Einen besonderen Vorteil erlangt man, wenn man bei der Aufbringung der Heckscheibenheizdrähte ein zusätzliches Leiterband aufbringt und dieses als die eine Sensorelektrode verschaltet.

Fehlt beim Automobil eine geeignete Heckscheibe, wie z. B. bei Cabriolets, so läßt sich die bandförmige Elektrode als Leiterfolie oder als aufgedampftes Metallband aufbringen. Das offene Verdeck eines Cabriolets ist mit dieser Einrichtung bei einsetzenden Niederschlägen automatisch schließbar.

Durch den Aufbau der Steuerung auf der Basis eines Mikroprozessors und die Erstellung eines Steuerungsbausatzes mit wenigen Einzelteilen erreicht man sowohl für Nachrüstzwecke als auch für einen serienmäßigen Einbau eine Einrichtung, die kostenmäßig einen geringen Aufwand erfordert.

Anhand einiger Figuren wird die Erfindung nachstehend an Ausführungsbeispielen erläutert. Es zeigt:
- Fig. 1: ein Blockschaltbild,
- Fig. 2: einen Sensor,
- Fig. 3: ein Automobilheck,
- Fig. 4: einen mit einer Heckscheibenheizung montierter Sensor an der Heckscheibe eines Automobils,
- Fig. 5: ein Blockschaltbild einer Mikroprozessorsteuerung,
- Fig. 6: eine Ausführungsart eines Bausatzes der niederschlagsabhängigen Steuerung für ein Abdecksystem.

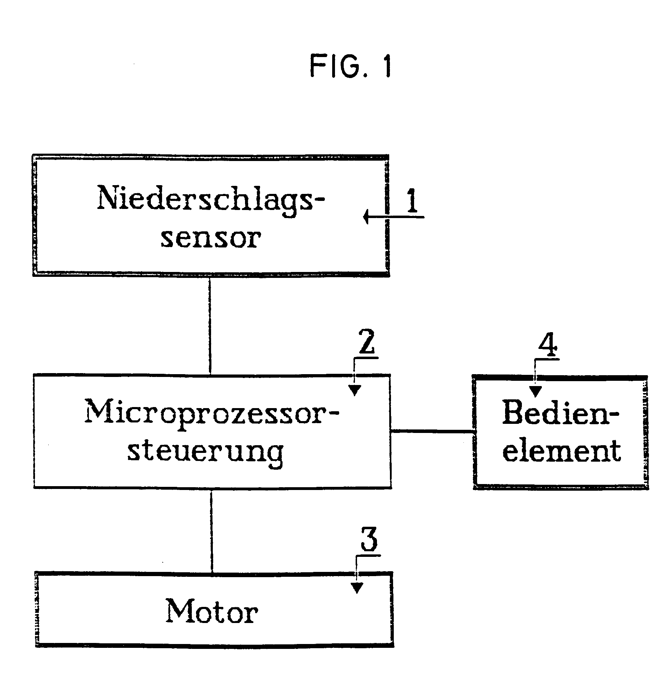

Mittels eines Blockschaltbildes ist in Fig. 1 aufgezeigt, daß der Sensor 1 in direktem Kontakt zu der Mikroprozessorsteuerung 2 steht. Der Antriebsmotor 3 und das Bedienelement 4, beispielsweise Ein- und Ausschaltknöpfe, sind in Automobilen mit elektrischem Schiebedach fester Bestandteil, ebenso sind nahezu sämtliche modernen Autos mit Heckscheibenheizung ausgestattet.

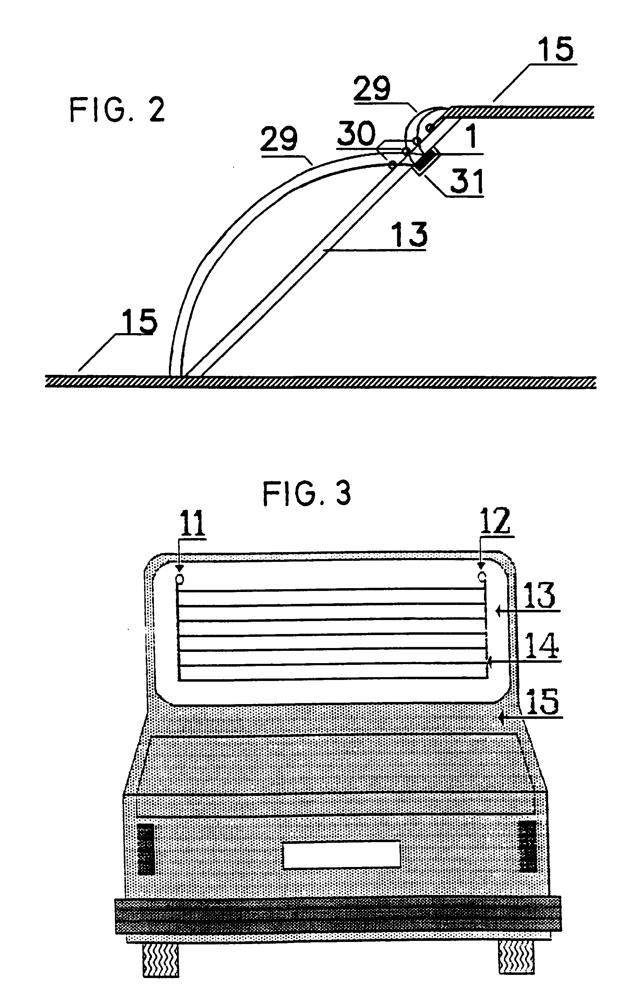

Die Fig. 2 zeigt im Querschnitt eines Automobilhecks den Sensor, der aus einer bandförmigen Elekrode 1, einer Isolierung 31, der Autokarosserie 15 und der Heckscheibe 13 besteht. Durch Anlegen einer Gleichspannung von 5 V an der Elektrode 1 entsteht zwischen der bandförmigen Elektrode und der Autokarosserie 15 ein elektrisches Feld 29. Multipliziert man jetzt die durch diese Anordnung entstandene elektrische Feldkonstante mit der Dielektrizitätszahl von Glas und Luft, so erhält man die Dielektrizitätskonstante ε des Dielektrikums. Bei Eintreten von Niederschlag wie Regen 30 auf das Heckscheibenglas 13 wird der Faktor der Dielektrizitätszahl von Wasser εᵣ je nach Niederschlagsmenge mit dem Faktor der elektrischen Feldkonstante εₒ multipliziert. Durch die zusätzlich über das Streufeld influenzierte Ladung auf die beiden Trägerelektroden 1 und 15 wird somit eine Kapazitätssteigerung erreicht.

Die Fig. 3 zeigt den Sensor und ein Automobilheck mit einer Heckscheibenheizung 14 auf einer Heckscheibe 13 aus Glas, welche als Isolation zwischen den beiden Kondensatorelektroden Heckscheibenheizung 14 und Autoblech 15 dient. Bei Einsatz als Elektrode werden die Anschlüsse 11 und 12 von der Heizungsversorgung abgetrennt und ein Anschluß stattdessen mit der Mikroprozessorsteuerung verbunden.

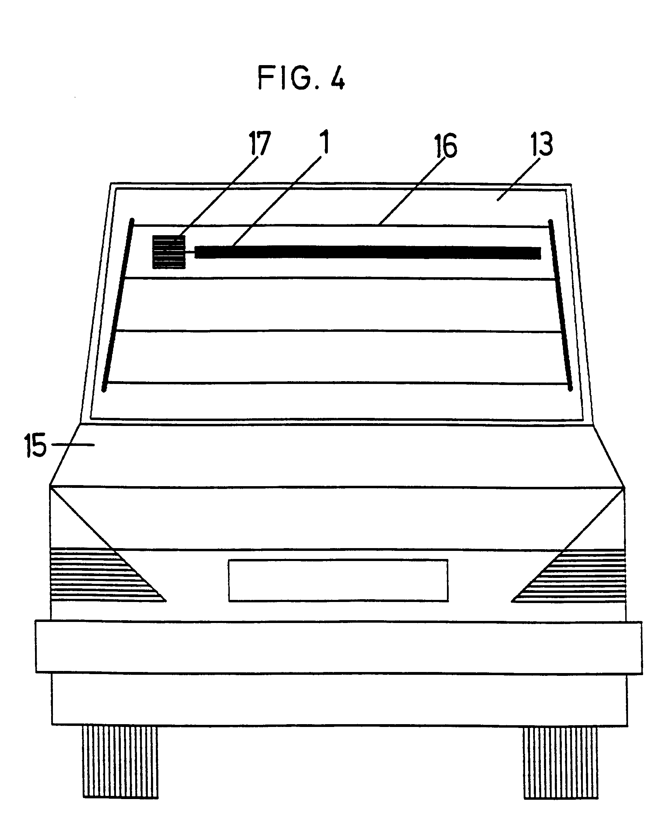

Der in der Fig. 4 dargestellte Sensor besteht aus einem bandförmigen Leiter 1, der zwischen Heizdrähten 16 einer Heckscheibenheizung auf einer Heckscheibe 13 angebracht ist, wobei das Heckscheibenglas der Heckscheibe 13 und Luft als Dielektrikum und die Metallfläche 15 der Autokarosserie als zweite Elektrode wirken und so die Kondensatorwirkung erzeugen. Wird nun die Heckscheibe 13 mit Niederschlägen, wie Regen oder Schnee befallen, ändert sich das Dielektrikum, wodurch der Oszillator 17 seine Frequenz ändert und diese an den Mikroprozessor 18 weiterleitet. Der Mikroprozessor 18 gibt in Abhängigkeit der Frequenzänderung Steuersignale an das Antriebssystem der Abdeckung weiter.

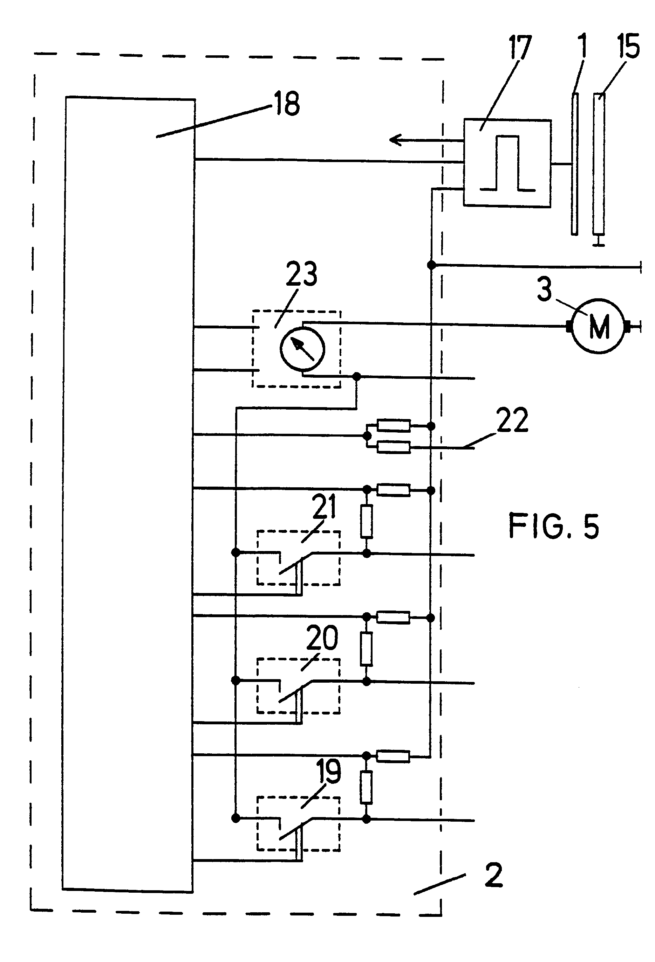

In der Fig. 5 ist das Blockschaltbild der gesamten Steuerungseinrichtung dargestellt. Wie ersichtlich, handelt es sich dabei um eine Mikroprozessorsteuerung 2. Der Einsatz eine Mikroprozessors 18 hat den Vorteil, daß sowohl Niederschlagszuwachs als auch Trocknungsvorgänge und konstante Dielektrikumszustände erfaßt werden und in die Befehlsausführung einfließen. Mit 19 bis 21 sind elektronische Schalter bezeichnet, mit denen Schließ- und Öffnungsvorgänge von Schiebe- und Hebedach angewählt werden können. Mit der Bezugszahl 22 wird die Zuleitung zum Zündschloß dargestellt, die bewirkt, daß bei eingeschalteter Zündung die Automatik außer Betrieb gesetzt ist. Beim Abschalten der Zündung wird die Frequenz des Oszillators 17 als Grundfrequenz gespeichert, die dem jeweiligen Dielektrikumszustand auf der Heckscheibe (Verschmutzung, Nässe, Schneebelag) entspricht. Dieser Vorgang wiederholt sich bei jeder Stellung des Abdecksystems, die durch manuelle Schalterbetätigung erreicht wird und bei Trocknungsvorgängen des Glases, auf welchem der Sensor angebracht ist. Wie bei der Erläuterung zur Fig. 4 schon erwähnt, wird mit 17 der Oszillator, mit 1 der bandförmige Leiter und mit 15 die Metallfläche der Autokarosserie bezeichnet.

Aus Sicherheitsgründen erhält die Mikroprozessorsteuerung 2 eine Stromüberwachung 23. Wird beim Schließvorgang dem Abdecksystem ein Widerstand entgegengesetzt - durch irgendein eingeklemmtes Teil - so steigt der Antriebsstrom an, der Signal für ein Rückgängigmachen des Schließsystems ist. Danach wird, bis zu einer endgültigen Abschaltung der Schließvorgang mehrmals neu eingeleitet. Der automatische Schließvorgang kann zu jedem Zeitpunkt durch Einschalten der Zündung oder durch manuelle Schalterbetätigung der Schiebe-/Hebedachbedienelemente abgebrochen werden.

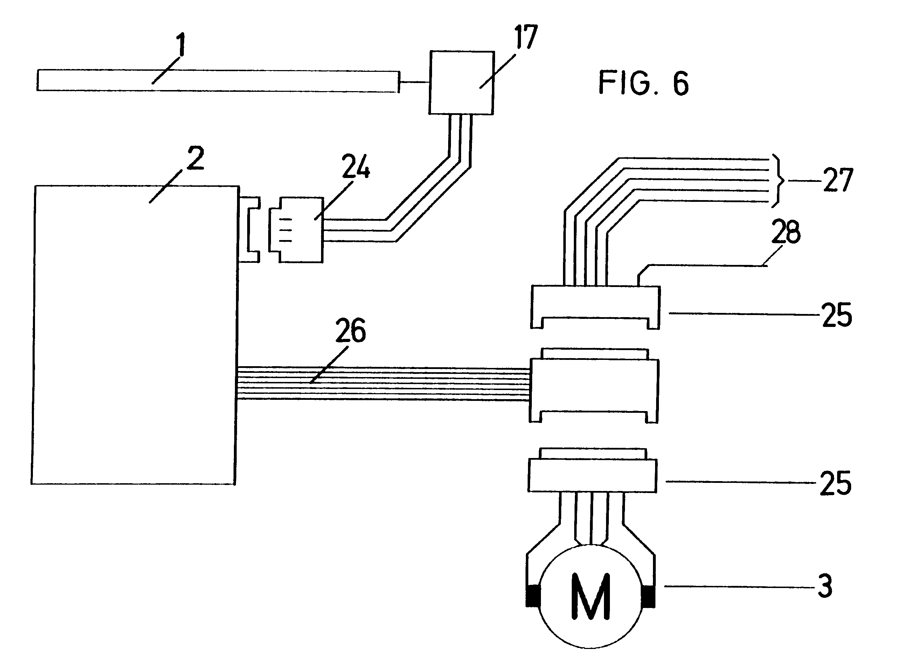

Gemäß Fig. 6 wird ein Bausatz für Nachrüstzwecke oder für serienmäßigen Einbau dargestellt. Danach wird der Oszillator 17 über eine Steckvorrichtung 24 mit der Mikroprozessorsteuerung 2 - die im Innenraum des Automobils an geeigneter Stelle untergebracht ist - verbunden. Der Anschluß der Sensorsteuerung erfolgt dann für den zusätzlichen Einbau (nachträglich oder serienmäßig) mittels eines Verbindungskabels 26 von der Mikroprozessorsteuerung 2 aus zur Verbindungsstelle 25 von Antriebskabel 27 mit 12V-Dauerversorgung 28 und Anschlußstelle des Antriebsmotors 3.

## Patentansprüche

1. Niederschlagsabhängige Steuerung für Abdecksysteme, mit einem bei Einwirkung von Niederschlägen ansprechbaren Sensor und einem von der Steuerung zur Betätigung einer Abdeckung in Betrieb gesetzten Antriebsmotor, wobei der Sensor aus einem Kondensator besteht, welcher seine Kapazität in Abhängigkeit des Materials (Dielektrikum) ändert, welches sich im elektrostatischen Feld der Kondensatorelektroden befindet, und wobei der Niederschlag als Dielektrikum dient und damit eine meßbare Kapazitätsänderung des Kondensators bewirkt, dadurch gekennzeichnet, daß die Steuerung eine Mikroprozessorsteuerung (2) ist, die den Antriebsmotor (3) nach Maßgabe eines Signals des Sensors (1) in Bewegung setzt, daß der Sensor (1) bei Automobilen aus einerseits der Scheibenheizung (14) oder einer bandförmigen innen an einer Fahrzeugscheibe angebrachten Elektrode und andererseits aus dem Fahrzeugblech (15) als Kondensatorelektroden besteht, mit dem Glas (13) als Isolierschicht zwischen den Elektroden, und daß ein Signale an die Steuerung weiterleitender und frequenzbestimmender Oszillator (17) in unmittelbarer Nähe an eine der zwei Elektroden angeschlossen ist.

2. Niederschlagsabhängige Steuerung nach Anspruch 1, dadurch gekennzeichnet, daß der Sensor (1) aus zwei flächig und gleichartig ausgebildeten, gegeneinander isolierten und beabstandeten Elektroden besteht, wobei deren Zwischenraum als Dielektrikum aus Glas und Luft besteht.

3. Niederschlagsabhängige Steuerung nach Anspruch 1, dadurch gekennzeichnet, daß bei Ausbildung der einen Elektrode als elektrisch leitendes Band dieses zwischen den Heizdrähten (16) der Heckscheibe (13) eines Automobils von den Heizdrähten beabstandet und isoliert angebracht ist.

4. Niederschlagsabhängige Steuerung nach Anspruch 1 oder 3, dadurch gekennzeichnet, daß zusätzlich zu den Heizdrähten der Heckscheibenheizung (14) eine bandförmige Elektrode für die niederschlagsabhängige Steuerung montiert ist.

5. Niederschlagsabhängige Steuerung nach Anspruch 1, dadurch gekennzeichnet, daß die eine Elektrode ein auf der Frontscheibe aufgedampfter Metallstreifen oder eine Metallfolie ist und bei der die andere Elektrode die elektrisch leitende Fahrzeugmasse ist.

6. Niederschlagsabhängige Steuerung nach Anspruch 1, dadurch gekennzeichnet, daß die Mikroprozessorsteuerung (2) bei Einsatz in einem Automobil bei ausgeschalteter Zündung betriebsbereit ist und jede Stellung des Abdecksystems erfaßt und Signale des Sensors (1) bei jeder Stellung des Abdecksystems verwertet, und daß die Reaktion der Mikroprozessorsteuerung (2) in Abhängigkeit des Niederschlags einstellbar ist.

7. Niederschlagsabhängige Steuerung nach Anspruch 6, dadurch gekennzeichnet, daß die Steuerung (2) so arbeitet, daß das Abdecksystem dann anhält und wieder in Offenstellung zurückfährt, wenn während des Schließvorgangs eine Verklemmung stattfindet, um anschließend den Schließvorgang zu wiederholen.

8. Niederschlagsabhängige Steuerung nach einem der Ansprüche 1 bis 7, dadurch gekennzeichnet, daß an den Mikroprozessor (18) mehrere elektronische Schalter (19 - 21), eine Zündungsüberwachung, eine Stromüberwachung und schließlich der Oszillator (17) mit der Scheibenheizung und/oder der bandförmigen Elektrode angeschlossen sind.

9. Niederschlagsabhängige Steuerung nach einem der Ansprüche 1 bis 8, dadurch gekennzeichnet, daß sie aus einem Bausatz besteht, der lediglich eine Steuereinheit und einen Oszillator (17) mit angeschlossener bandförmiger Elektrode enthält.

10. Niederschlagsabhängige Steuerung nach einem der Ansprüche 1 bis 9, dadurch gekennzeichnet, daß durch den Mikroprozessor Niederschlagszuwachs und Trocknungsvorgänge sowie Dielektrikumszustände in Verbindung mit dem Oszillator (17) und der bandförmigen Elektrode feststellbar sind.

## Claims

1. A rain-actuated control for covering systems with a driving motor for controlling a covering and a sensor responsive to the presence of precipitation, said sensor consists of a capacitor having electrodes and a dielectric material exposed to the precipitation, said capacitor changes its capacity as a function of the dielectric material which is in the electrostatic field of the capacitor electrodes in response to the presence of precipitation, wherein the control is a microprocessor control (2) for setting in motion the driving motor (3) in response to a signal from the sensor (1), in automobiles the sensor (1) consists, as the capacitor electrodes, on the one hand of a window heater (14) or a strip-shaped electrode mounted on the inside of a windshield while another of the electrodes is the sheet metal (15) of the vehicle body, with the glass (13) serving as an insulating layer between the electrodes, and an oscillator (17) is connected in the immediate vicinity to one of the two electrodes and which passes a signal to the control and determines the frequency.

2. A rain-actuated control of claim 1, wherein the sensor (1) is formed from two two-dimensional and similarly configured, mutually insulated and spacedapart electrodes, the gap between the electrodes consisting of glass and air as dielectric.

3. A rain-actuated control of claim 1, wherein the one electrode is an electrically conductive strip, which is installed between the heating wires (16) of the rear window (13) of an automobile at a distance from and insulated from the heating wires.

4. A rain-actuated control of claim 1 or 3, wherein a strip-shaped electrode for the rain-actuated control is mounted additionally to the heating wires of a rear window heater (14).

5. A rain-actuated control of claim 1, wherein the one electrode is a vapor-deposited metal strip or a metal foil on the windshield, while the other electrode is the electrically conducting vehicle mass.

6. A rain-actuated control of claim 1, wherein the microprocessor control (2) accomodated in an automobile is operative when the ignition is switched off, and covers each position of the covering system and utilizes signals of the sensor (1) at each position of the covering system, and the response of the microprocessor control (2) is adjustable depending on the precipitation.

7. A rain-actuated control of claim 6, wherein the control (2) operates so that due to a jam during the closing process the covering system then stops and returns to open position and subsequently repeats the closing process.

8. A rain-actuated control of one of the claims 1-7, wherein several electronic switches (19-21), an ignition monitor, a current monitor and finally the oscillator (17) with the window heater and/or the strip-shaped electrode are connected to the microprocessor (18).

9. A rain-actuated control of one of the claims 1-8, wherein the control consists of a kit, only comprising a control unit and an oscillator (17) connected to a strip-shaped electrode.

10. A rain-actuated control of one of the claims 1-9, wherein the microprocessor determines increases in precipitation as well as drying processes of constant dielectric in connection with the oscillator (17) and the strip-shaped electrode.

## Revendications

1. Commande pour systèmes de recouvrement dépendant de précipitations avec un capteur répondant à l'action de précipitations et un moteur de commande actionnant un recouvrement qui est mis en marche par la commande, ledit capteur étant composé d'un condensateur qui modifie sa capacité en fonction de la matière (diélectrique) qui se trouve dans le champ électrostatique des électrodes du condensateur et les précipitations servant de diélectrique et provoquant ainsi une modification mesurable de la capacité du condensateur, ladite commande étant caractérisée par le fait qu'elle est une commande à microprocesseur (2) qui active le moteur de commande (3) en fonction d'un signal du capteur (1), et que, pour automobiles, le capteur (1) comprend d'une part le chauffagevitre (14) ou une électrode en forme de ruban montée sur le côté intérieur d'une vitre et d'autre part la tôle du véhicule (15) comme électrodes de condensateur, le verre (13) servant de couche isolante entre les électrodes, ladite commande est caractérisée également par le fait qu'un oscillateur (17) qui transmet des signaux à la commande et détermine la fréquence est raccordé en proximité directe à une des deux électrodes.

2. Commande dépendant de précipitations d'après la revendication numéro 1, caractérisée par le fait que le capteur (1) est constitué de deux électrodes bidimensionnelles et similaires qui sont isolées l'une contre l'autre et espacées, l'espace intermédiaire servant de diélectrique de verre et d'air.

3. Commande dépendant de précipitations d'après la revendication numéro 1, caractérisée par le fait que, au cas où l'une des électrodes serait un ruban électroconducteur, ce ruban est disposé entre les fils de chauffage (16) de la lunette arrière (13) d'un automobile de façon à être espacé et isolé des fils de chauffage.

4. Commande dépendant de précipitations d'après la revendication numéro 1 ou 3, caractérisée par le fait qu'en plus des fils de chauffage du chauffage de la lucarne arrière (14) est montée une électrode en forme de ruban pour la commande dépendant de précipitations.

5. Commande dépendant de précipitations d'après la revendication numéro 1, caractérisée par le fait que l'une des électrodes est une bande de métal ou une feuille de métal appliquée sur le pare-brise par vaporisation, l'autre électrode étant la masse électroconductrice du véhicule.

6. Commande dépendant de précipitations d'après la revendication numéro 1, caractérisée par le fait que, lors de l'usage dans un automobile, la commande à microprocesseur (2) est en mode de fonctionnement si l'allumage n'est pas activé et qu'elle couvre toute position du système de recouvrement et qu'elle traite les signaux du capteur (1) dans toute position du système de recouvrement, et caractérisée également par le fait que la réaction de la commande à microprocesseur (2) est reglable en fonction des précipitations.

7. Commande dépendant de précipitations d'après la revendication numéro 6, caractérisée par le fait que la commande (2) fonctionne de façon à arrêter le système de recouvrement et de le repositionner en position ouverte au cas où il serait bloqué lors du processus de fermeture pour recommencer ensuite le processus de fermeture.

8. Commande dépendant de précipitations d'après une des revendications numéro 1 à 7, caractérisée par le fait que plusieurs interrupteurs électroniques (19 - 21), un contrôl d'allumage, un contrôl de courant et finalement l'oscillateur (17) avec le chauffage-vitre et/ou l'électrode en ruban sont raccordés au microprocesseur (18).

9. Commande dépendant de précipitations d'après une des revendications numéro 1 à 8, caractérisée par le fait que ladite commande consiste en un jeu de pièces détachées ne comprenant qu'une unité de commande et un oscillateur (17) auquel est raccordé l'électrode en ruban.

10. Commande dépendant de précipitations d'après une des revendications numéro 1 à 9, caractérisée par le fait que, grâce au microprocesseur, un accroissement des précipitations et des processus de sechage ainsi que les états du diélectrique en relation avec l'oscillateur (17) et l'électrode en ruban sont détectables.
